(19) Europäisches Patentamt / European Patent Office / Office européen des brevets

(11) **EP 3 589 565 B1**

(12) **EUROPÄISCHE PATENTSCHRIFT**

(45) Veröffentlichungstag und Bekanntmachung des Hinweises auf die Patenterteilung:
**31.03.2021 Patentblatt 2021/13**

(21) Anmeldenummer: **18709493.3**

(22) Anmeldetag: **26.02.2018**

(51) Int Cl.:
*B65G 29/00* (2006.01)     *B23Q 1/52* (2006.01)
*B23Q 39/04* (2006.01)

(86) Internationale Anmeldenummer:
**PCT/EP2018/054715**

(87) Internationale Veröffentlichungsnummer:
**WO 2018/158204 (07.09.2018 Gazette 2018/36)**

(54) **TRANSPORTEINRICHTUNG ZUM TRANSPORT VON OBJEKTEN VON ARBEITSSTATION ZU ARBEITSSTATION EINER PRODUKTIONSANLAGE UND PRODUKTIONSANLAGE ZUR HERSTELLUNG VON PRODUKTEN MIT EINER DERARTIGEN TRANSPORTEINRICHTUNG**

TRANSPORT DEVICE FOR TRANSPORTING OBJECTS FROM WORK STATION TO WORK STATION OF A PRODUCTION SYSTEM AND PRODUCTION SYSTEM FOR THE MANUFACTURING OF PRODUCTS WITH A TRANSPORT DEVICE OF THIS TYPE

DISPOSITIF DE TRANSPORT SERVANT AU TRANSPORT D'OBJETS DE STATION DE TRAVAIL EN STATION DE TRAVAIL DANS UNE INSTALLATION DE PRODUCTION, ET INSTALLATION DE PRODUCTION DESTINÉE À LA FABRICATION DE PRODUITS ET DOTÉE D'UN TEL DISPOSITIF DE TRANSPORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.02.2017 DE 102017001828**

(43) Veröffentlichungstag der Anmeldung:
**08.01.2020 Patentblatt 2020/02**

(73) Patentinhaber: **Fresenius Medical Care Deutschland GmbH**
**61352 Bad Homburg v.d.H (DE)**

(72) Erfinder:
• **HEPPE, John**
  **66606 St. Wendel (DE)**
• **KUGELMANN, Franz**
  **66606 St. Wendel (DE)**
• **MEISINGER, Matthias**
  **66646 Marpingen (DE)**

(74) Vertreter: **Oppermann, Frank**
**OANDO Oppermann & Oppermann LLP**
**Wilhelminenstrasse 1a**
**65193 Wiesbaden (DE)**

(56) Entgegenhaltungen:
**EP-A2- 0 446 659     FR-A5- 2 045 428**

**Beschreibung**

Die Erfindung betrifft eine Transporteinrichtung zum Transport von Objekten von Arbeitsstation zu Arbeitsstation einer Produktionsanlage mit einer ortfesten Baugruppe, einem um eine Drehachse in aufeinanderfolgenden Arbeitstakten drehbaren Objektträger, einer Mehrzahl von umfangsmäßig verteilt angeordneten relativ zum Objektträger auf einer Kreisbahn bewegbaren Objekt-Trägerelementen zur Ablage von einem oder mehreren Objekten und einer Antriebeinheit zum Antrieb des Objektträgers. Darüber hinaus betrifft die Erfindung eine Produktionsanlage zur Herstellung von Produkten, insbesondere von mit einem medizinischen Produkt befüllten Behältnissen.

In Produktionsanlagen zur Herstellung von Produkten finden zum Transport der Produkte von Arbeitsstation zu Arbeitsstation Drehtische Verwendung, die auch als Rundtische oder Rundschalttische bezeichnet werden. Die bekannten Rundschalttische weisen einen kreisrunden Objektträger auf, der um eine vertikale Achse drehbar ist. Der Objektträger wird von einer Antriebseinheit angetrieben. Der Objektträger dreht sich während der Produktion in einzelnen Arbeitstakten im oder entgegen dem Uhrzeigersinn. Die Arbeitsstationen sind um den Objektträger umfangsmäßig verteilt angeordnet. Die zu bearbeitenden Objekte befinden sich umfangsmäßig verteilt auf dem Objektträger. Durch Drehen des Objektträgers können die Objekte von Arbeitsstation zu Arbeitsstation transportiert werden. Die Arbeitsstationen führen an den Objekten jeweils einen Arbeitsprozess aus, der einen oder mehrere Produktionsschritte umfassen kann. Die Objekte können auf dem Objektträger in Objekt-Trägerelementen angeordnet sein, die ein oder mehrere Objekte aufnehmen. Die Objekte können herzustellende Produkte (Waren) oder zu bearbeitende Werkstücke oder Prüfgegenstände sein.

Die bekannten Rundschalttische verfügen über Objektträger, auf denen die Objekt-Trägerelemente relativ zueinander unbeweglich angeordnet sind. Sie sind in vorgegebenen Abständen umfangsmäßig verteilt auf dem Objektträger befestigt. In Verbindung mit den ortsfesten Arbeitsstationen werden die Objekt-Trägerelemente allein durch die Drehung des Objektträgers in die entsprechende Position gegenüber der jeweiligen Arbeitsstation gebracht. Dort verharren die Objekt-Trägerelemente zwangsläufig solange, bis die Arbeitsstation den Arbeitsprozess durchgeführt hat.

Eine Produktionsanlage verfügt im Allgemeinen über Arbeitsstationen mit unterschiedlichen Prozesszeiten. Dabei wird die schrittweise Drehung des Objektträgers im Wesentlichen durch die Dauer des längsten Prozesses bestimmt. Aufgrund des Stillstandes des Objektträgers während eines Arbeitsprozesses mit einer langen Prozesszeit, der vorgegebenen Abstände der Objekt-Trägerelemente und der schrittweisen Drehung des Objektträgers um einen vorgegebenen Drehwinkel ist auch für die Arbeitsprozesse mit kurzen Prozesszeiten zur Bearbeitung jedes Objektes jeweils eine eigene Arbeitsstation erforderlich. Diese Arbeitsstationen kommen allerdings nur kurz zum Einsatz, so dass die Auslastung dieser Arbeitsstationen gering ist. Dies ist mit hohen Investitionen und Betriebskosten verbunden und wenig effizient. Zudem steigt mit der Anzahl der Arbeitsstationen die Ausfallwahrscheinlichkeit der Produktionsanlage. Solche Produktionsanlagen zeichnen sich durch eine hohe Komplexität und eine fehlende Zugänglichkeit der Komponenten aus.

Wenn das Produktionsverfahren Arbeitsprozesse mit unterschiedlichen Prozesszeiten umfasst, ist aus den oben genannten Gründen der Einsatz einer Transporteinrichtung von Vorteil, bei dem der Objektträger und die Objekt-Trägerelemente keine starre Anordnung darstellen, so dass einige Objekt-Trägerelemente an Arbeitsstationen mit einer langen Prozesszeit verbleiben können, während andere Objekt-Trägerelemente von Arbeitsstation zu Arbeitsstation transportiert und die jeweiligen Arbeitsprozesse ausgeführt werden können.

Eine Transporteinrichtung gemäß dem Oberbegriff des Anspruchs 1 , die zum Transport von Objekten von Arbeitsstation zu Arbeitsstation einer Produktionsanlage dient, ist aus der FR 2 045 428 A5 bekannt. Die Transporteinrichtung verfügt über eine ortsfeste Baugruppe und einen um eine Drehachse in aufeinanderfolgenden Arbeitstakten drehbaren Objektträger, auf dem mehrere Objekt-Trägerelemente zur Ablage von Objekten umfangsmäßig verteilt angeordnet sind. Die Objekt-Trägerelemente sind relativ zum Objektträger auf einer Kreisbahn bewegbar. Zum Antrieb des Objektträgers ist eine Antriebeinheit vorgesehen. Der ortsfesten Baugruppe sind ortsfeste Koppelelemente zugeordnet, die mit dem jeweiligen Objekt-Trägerelement gekoppelt oder entkoppelt werden können.

Eine Transporteinrichtung zum Transport von Objekten von Arbeitsstation zu Arbeitsstation mit einem drehbaren Objektträger und auf dem Objektträger bewegbaren Objekt-Trägerelementen ist auch aus der EP 0 446 659 A2 bekannt.

Bei der Steuerung einer Transporteinrichtung stellt sich generell das Problem, dass die Position der einzelnen Objekt-Trägerelemente in Bezug auf die ortsfesten Arbeitsstationen bekannt sein muss, um eine korrekte Zuordnung der Objekt-Trägerelemente und den Arbeitsstationen sicherstellen zu können. Die bekannten Rundschalttische verfügen daher über einen Drehwertgeber, der die Drehstellung des Drehtisches ermittelt. Wenn die Drehstellung des Objektträgers bekannt ist, kann auf die Position der Objekt-Trägerelemente auf dem Objektträger geschlossen werden. Dies setzt aber voraus, dass die Objekt-Trägerelemente mit dem Objektträger in einer vorgegebenen Anordnung fest verbunden sind. Ansonsten wäre die Bestimmung der Drehstellung des Objektträgers nicht ausreichend.

Der Betrieb einer Transporteinrichtung setzt eine Initialisierung voraus, in der die einzelnen Komponenten in eine definierte Grundstellung gefahren werden. In der Praxis ist von Bedeutung, dass die Transporteinrichtung auch nach einem Störfall, beispielsweise einem Stromausfall oder einem Not-Halt, den Betrieb wieder schnell aufnehmen kann.

Der Erfindung liegt die Aufgabe zugrunde, eine Transporteinrichtung zum Transport von Objekten von Arbeitsstation zu Arbeitsstation einer Produktionsanlage bereitzustellen, die einen relativ einfachen Aufbau hat und eine flexible Gestaltung des Produktionsprozesses erlaubt. Eine weitere Aufgabe der Erfindung ist eine Produktionsanlage zur Herstellung von Produkten zu schaffen, die einen relativ einfachen Aufbau hat und eine flexible Gestaltung des Produktionsprozesses erlaubt.

Die Lösung dieser Aufgaben erfolgt erfindungsgemäß mit den Merkmalen der unabhängigen Patentansprüche. Die abhängigen Ansprüche betreffen vorteilhafte Ausführungsformen der Erfindung.

Die erfindungsgemäße Transporteinrichtung zum Transport von Objekten von Arbeitsstation zu Arbeitsstation einer Produktionsanlage verfügt über eine ortsfeste Baugruppe, einen in aufeinanderfolgenden Arbeitstakten um eine Drehachse drehbaren Objektträger und eine Mehrzahl von umfangsmäßig verteilt angeordneten relativ zum Objektträger auf einer Kreisbahn bewegbaren Objekt-Trägerelementen zur Ablage von einem oder mehreren Objekten sowie eine Antriebeinheit zum Antrieb des Objektträgers.

Unter der ortsfesten Baugruppe wird der stationäre Teil der Transporteinrichtung verstanden. Die ortsfeste Baugruppe bildet den Stator und der Objektträger den Rotor mit Antrieb der Transporteinrichtung. Unter Objekt-Trägerelementen werden sämtliche Elemente verstanden, auf denen ein oder mehrere Objekte abgelegt oder angeordnet werden können. Die Objekte können auf den Objekt-Trägerelementen lose liegen oder auf den Objekt-Trägerelementen fixiert sein.

Die erfindungsgemäße Transporteinrichtung zeichnet sich dadurch aus, dass die Objekt-Trägerelemente auf einer Kreisbahn relativ zum Objektträger verschiebbar geführt sind. Folglich stellt der Objektträger zusammen mit den Objekt-Trägerelementen keine starre Anordnung dar. Die Objekt-Trägerelemente können gegenüber dem Objektträger frei verschoben werden und verfügen nicht über eigene Antriebe. Zum Antrieb des Objektträgers ist eine Antriebseinheit vorgesehen. Die Antriebseinheit kann beispielsweise ein elektromotorischer Antrieb sein.

Darüber hinaus zeichnet sich die erfindungsgemäße Transporteinrichtung dadurch aus, dass den Objekt-Trägerelementen Koppelelemente zugeordnet sind, die zusammen mit den Objekt-Trägerelementen gedreht werden. Die Koppelelemente können jeweils nur eine erste Schaltstellung oder eine zweite Schaltstellung einnehmen. In der ersten Schaltstellung ist das Koppelelement mit der ortsfesten Baugruppe in Eingriff und mit dem drehbaren Objektträger außer Eingriff, so dass das dem Koppelelement zugeordnete Objekt-Trägerelement an einer Arbeitsstation verbleibt, während in der zweiten Schaltstellung das Koppelelement mit der ortsfesten Baugruppe außer Eingriff ist und mit dem drehbaren Objektträger im Eingriff ist, so dass das dem Koppelelement zugeordnete Objekt-Trägerelement von Arbeitsstation zu Arbeitsstation bewegt wird.

Die Betätigung der Koppelelemente erlaubt eine Bewegung eines Objekt-Trägerelements zum Transport von Objekten zu einer Arbeitsstation mit einer kurzen Prozesszeit, während ein anderes Objekt-Trägerelement an einer Arbeitsstation mit einer langen Prozesszeit verbleibt. Durch die Steuerung der Antriebseinheit des Objektträgers und der Betätigung der Koppelelemente werden die Objekt-Trägerelemente mit den Objekten in der gewünschten Bearbeitungsposition gegenüber der jeweiligen Arbeitsstation positioniert und können von einer Arbeitsstation zu einer anderen Arbeitsstation weiterbewegt werden.

Da die Objekt-Trägerelemente nicht über eigene Antriebe verfügen, vereinfacht sich der Aufbau der Transporteinrichtung. Die Transporteinrichtung kann mit konventionellen Baugruppen realisiert werden. Die Verwendung von Standard-Maschinenteilen macht die Transporteinrichtung wartungsarm. Für einzelne Objekte lassen sich beliebige Wartezonen einrichten und auch zusätzliche Prozesse, beispielsweise die Reinigung von Objekten, lassen sich leicht in den Produktionsprozess integrieren.

Bei der erfindungsgemäßen Transporteinrichtung ist sowohl für die Kopplung eines Objektträger-Elements an den Objektträger als auch die Kopplung des Objektträger-Elements an die ortsfeste Baugruppe nur ein Koppelelement vorgesehen, das nur zwei definierte Schaltstellungen einnehmen kann, d.h. die Kopplung des Objektträger-Elements an den Objektträger oder die ortsfeste Baugruppe. Auch wenn in diesem Zusammenhang von nur einem Koppelelement die Rede ist, werden darunter auch Koppelemente verstanden, die aus mehreren Einzelteilen bestehen können.

Eine bevorzugte Ausführungsform sieht vor, dass für die Kopplung bzw. Entkopplung der Objekt-Trägerelemente an die bzw. von der ortsfesten Baugruppe eine vorgegebene Anzahl von umfangsmäßig verteilt angeordneten Ausnehmungen an der ortsfesten Baugruppe vorgesehen sind und für Kopplung bzw. Entkopplung der Objekt-Trägerelemente an den bzw. von dem drehbaren Objektträger eine vorgegebene Anzahl von Ausnehmungen an dem Objektträger vorgesehen sind. Die Anzahl der Ausnehmungen der ortsfesten Baugruppe kann der Anzahl der Ausnehmungen des Objektträgers entsprechen, wobei die Anzahl der Ausnehmungen der ortsfesten Baugruppe bzw. des Objektträgers, die Anzahl der Positionen festlegt, die das Objekt-Trägerelement einnehmen kann.

Bei einer bevorzugten Ausführungsform weist das Koppelement ein erstes Eingriffelement auf, das in der ersten Schaltstellung in eine der Ausnehmungen der ortfesten Baugruppe greift, und das Koppelement weist ein zweites Eingriffelement auf, das in der zweiten Schaltstellung in eine der Ausnehmungen des Objektträgers greift. Das erste und zweite Eingriffelement sind fest miteinander verbunden, so dass die beiden Eingriffelemente mit nur einem Aktor in die beiden Stellungen bewegt werden können.

Eine besonders bevorzugte Ausführungsform sieht vor, dass die Ausnehmungen der ortfesten Baugruppe radial nach innen weisende Öffnungen und die Ausnehmungen des Objektträgers radial nach außen weisende Öffnungen aufweisen, wobei das erste und zweite Eingriffelement in einer radialen Richtung derart verschiebbar geführt sind, dass in der ersten Schaltstellung das erste Eingriffelement in eine der Ausnehmungen der ortfesten Baugruppe und in der zweiten Schaltstellung das zweite Eingriffelement in eine der Ausnehmungen des Objektträgers greift. Die Ausnehmungen können unterschiedlich ausgebildet sein, beispielsweise einen rechteckförmigen oder kreisförmigen Querschnitt haben. Sie können auch an anderen Seiten geöffnet sein. Die Umschaltung kann bei dieser Ausführungsform dadurch erfolgen, dass das Koppelelement von dem Aktor auf einer horizontalen Achse vor- oder zurückgeschoben wird. Diese Ausführungsform hat einen besonders einfachen Aufbau. Es ist aber prinzipiell auch möglich, dass die Eingriffelemente von oben oder unten in nach oben oder unten geöffnete Ausnehmungen greifen.

Die Koppelelemente sind vorzugsweise an Führungselementen längsverschiebbar geführt, wobei die Aktoren zum Bewegen der Koppelelemente Kolben/Zylinder-Anordnungen sind, die mit einem Druckmittelmedium, insbesondere Druckluft, beaufschlagbar sind, so dass die Koppelelemente zwischen der ersten und zweiten Schaltstellung bewegbar sind. Es ist aber auch ein elektromagnetischer Stellantrieb möglich. Die Druckmittelversorgung bzw. elektrische Stromversorgung kann über Druckleitungen bzw. elektrische Leitungen erfolgen, die über eine Drehdurchführung zu einer Druckmittelquelle bzw. Stromquelle geführt werden.

Bei einer Ausführungsform, die sich durch einen besonders einfachen Aufbau auszeichnet, sind die Kolben/Zylinder-Anordnungen doppelt wirkende Kolben/Zylinder-Anordnungen mit zwei gegenüberliegenden Kolbenflächen, die mit einem Druckmittelmedium beaufschlagbar sind, so dass das Koppelelement in die entgegengesetzten Richtungen bewegt werden kann.

Die Objekt-Trägerelemente sind relativ zum Objektträger in einer Führungsbahn frei bewegbar geführt, so dass sie in Bezug auf ein ortsfestes Bezugssystem festgehalten werden können. Die Führungsbahn kann unterschiedlich ausgebildet sein. Allein entscheidend ist, dass sich die Objekt-Trägerelemente auf der Kreisbahn bewegen können.

Zur Aufnahme der Objekte weisen die Objekt-Trägerelemente vorzugsweise Aufnahmeelemente auf, in die oder auf die sich die Objekte ein- bzw. auflegen lassen. Dadurch sind die Objekte an den Objekt-Trägerelementen ausreichend fixiert.

Um die Objekt-Trägerelemente relativ zum Objektträger verschieben zu können, ist bei einer Ausführungsform auf einem Abschnitt der Kreisbahn ein Objekt-Trägerelement nicht angeordnet und auf den anderen Abschnitten der Kreisbahn ist jeweils ein Objekt-Trägerelement angeordnet. Es ist aber auch möglich, dass auf mehreren Abschnitten der Kreisbahn keine Objekt-Trägerelemente angeordnet sind.

Die Koppelelemente, die jeweils nur eine der beiden Schaltstellungen einnehmen können, haben den Vorteil, dass ein Betriebszustand, in dem ein Objekt-Trägerelement sowohl mit dem Objektträger als auch mit der ortsfesten Baugruppe in Eingriff ist, nicht auftreten kann. Dadurch verringert sich die Gefahr einer Kollision.

Ein weiterer Vorteil liegt darin, dass ein Verlust der Segmentkopplung nicht auftreten kann, da nur eine der beiden Schaltstellungen eingenommen werden kann. Folglich befindet sich das Objekt-Trägerelement in Bezug auf ein ortsfestes Referenzsystem oder die Arbeitsstationen, die die Objekt-Trägerelemente umgeben, immer in einer definierten Position. Wenn das Objekt-Trägerelement nicht durch das Koppelelement in wenigstens einer der beiden Positionen festgelegt wäre, könnte das Objekt-Trägerelement jede beliebige Zwischenposition einnehmen.

Dieser Vorteil kommt insbesondere dann zum Tragen, wenn nach einen Störfall, beispielsweise einem Stromausfall oder einem Not-Halt eine erneute Initialisierung der Transporteinrichtung erforderlich ist, um den Betrieb wieder aufzunehmen. Nach einem Stromausfall beispielsweise sind sämtliche Positionsdaten verloren. Daher ist es erforderlich, die Position der einzelnen Objekt-Trägerelemente neu zu bestimmen. Da die Objekt-Trägerelemente aber nicht mit dem Objektträger fest verbunden, sondern gegenüber dem Objektträger beweglich sind, ist die Bestimmung der Drehstellung des Objektträgers für die Positionsbestimmung der Objekt-Trägerelemente nicht ausreichend. Zwar wäre die Positionsbestimmung der Objekt-Trägerelemente in Bezug auf die ortsfeste Baugruppe bzw. die Arbeitsstationen mit geeigneten analogen Messwertgebern möglich, die Integration einer derartigen Sensorik und die Erfassung und Auswertung der Daten wäre aber relativ aufwendig. Die erfindungsgemäße Zwangskopplung mittels der Koppelelemente erlaubt hingegen eine relativ einfache Positionsbestimmung der Objekt-Trägerelemente.

Eine bevorzugte Ausführungsform der Einrichtung zur Bestimmung der Position der Objekt-Trägerelemente weist den einzelnen Objekt-Trägerelementen zugeordnete Positionssensoren auf, die umfangsmäßig verteilt angeordnet sind. Die Positionssensoren, die unterhalb der Objekt-Trägerelemente an der ortsfesten Baugruppe angeordnet sein können, sind derart ausgebildet, dass sie ein Positionssignal erzeugen, wenn sich ein Objekt-Trägerelement auf dem Objektträger in einer dem jeweiligen Sensor zugeordneten Position befindet oder sich ein Objekt-Trägerelement nicht in einer dem jeweiligen Sensor zugeordneten Position befindet.

Bei einer besonders bevorzugten Ausführungsform sind die Positionssensoren induktive Sensoren, wobei an dem Objekt-Trägerelement ein von dem induktiven Sensor erfassbares Markierungselement angeordnet ist. Die Positionssensoren können auch optische Sensoren sein, die an der Form und/oder Farbe ein Markierungselement erkennen können, oder können auch taktile Sensoren sein.

Die Einrichtung zur Bestimmung der Position der Objekt-Trägerelemente verfügt über eine Auswerteeinheit, die derart ausgebildet ist, dass ein die Position der Objekt-Trägerelemente beschreibender Datensatz erzeugt wird. Auf der Grundlage dieses Datensatzes kann die Steuereinheit eine Initialisierung des Systems beispielsweise nach einem Stromausfall, wenn sämtliche Positionsdaten verloren gegangen sind, vornehmen.

Bei der Positionsbestimmung ist zu berücksichtigen, dass die Reihenfolge der Objekt-Trägerelemente feststeht. Allerdings befindet sich ein Objekt-Trägerelement nicht in jedem Kreissegment, d. h. zwischen aufeinanderfolgenden Objekt-Trägerelementen kann eine Lücke vorhanden sein.

Die Auswertung der Positionssignale der Positionssensoren erlaubt die Bestimmung der Lage der Objekt-Trägerelemente, insbesondere die Bestimmung der Lage der Lücke zwischen aufeinanderfolgenden Objekt-Trägerelementen. Die Signalauswertung erweist sich als besonders einfach, da nur zwei mögliche Signalzustände auszuwerten sind. Die Auswertung der Positionssignale gibt aber noch keinen Hinweis darauf, wo sich das erste Objekt-Trägerelement der Reihe von Objekt-Trägerelementen befindet. Daher sieht eine weitere bevorzugte Ausführungsform eine Eingabeeinheit zur Eingabe der Position eines der Objekt-Trägerelemente, insbesondere die Eingabe der Position des ersten Objekt-Trägerelements in Bezug auf ein ortsfestes Referenzsystem vor. Die Eingabe eines anderen Objekt-Trägerelements ist auch möglich, da die Reihenfolge der Objekt-Trägerelemente und die Position der Lücke bekannt ist, so dass auch aus der Position eines anderen Objekt-Trägerelements die Position des ersten Objekt-Trägerelement bestimmt werden kann. Beispielsweise kann die Position des ersten Objekt-Trägerelements in Bezug auf eine der ortsfesten Arbeitsstationen eingegeben werden.

Bei einer besonders bevorzugten Ausführungsform wertet die Auswerteinheit der Einrichtung zur Bestimmung der Anordnung der Objekt-Trägerelemente das Positionssignal der Positionssensoren aus, wobei auf der Grundlage der eingegebenen Position eines der Objekt-Trägerelemente ein die Position der Objekt-Trägerelemente in Bezug auf ein ortsfestes Referenzsystem beschreibender Datensatz erzeugt wird. Dieser Datensatz kann dann für die Initialisierung des Systems verwendet werden. In diesem Zusammenhang werden unter einem Datensatz sämtliche Daten oder Signale verstanden, mit denen die Anordnung bzw. die Position der Objekt-Trägerelemente beschrieben wird.

Die Einrichtung zur Bestimmung der Position der Objekt-Trägerelemente ist vorzugsweise über eine Datenleitung mit einer Steuereinrichtung für die Antriebseinheit des Objektträgers verbunden, so dass die Steuerung der Antriebseinheit des Objektträgers auf der Grundlage des ermittelten Datensatzes erfolgen kann.

Die erfindungsgemäße Produktionsanlage zur Herstellung von Produkten verfügt über eine oder mehrere der erfindungsgemäßen Transporteinrichtungen. Entlang der Bewegungsbahn der Transporteinrichtung können eine Mehrzahl von Arbeitsstationen angeordnet werden. Jede Arbeitsstation kann zur Durchführung eines Arbeitsprozesses vorgesehen sein, der mindestens einen Arbeitsschritt umfasst. Die nicht abschließende Liste möglicher Beispiele für Arbeitsschritte kann beinhalten: Manipulieren, Zuführen, Abführen, mechanisches Bearbeiten, thermisches Bearbeiten, Befüllen, Reinigen, Stecken, Bestücken, Wiegen, Markieren. Die Arbeitsstationen können einen Arbeitsprozess an einem Objekt oder mehreren Objekten gleichzeitig durchführen.

Bei einer besonders bevorzugten Ausführungsform findet die erfindungsgemäße Transporteinrichtung in einer Produktionsanlage zur Herstellung von mit einem medizinischen Produkt, insbesondere einem Arzneimittel, befüllten Behältnissen Verwendung, insbesondere zur Herstellung von medizinischen Lösungsbeuteln, beispielsweise Lösungsbeutel für die Peritonealdialyse oder die Akut-Hämodialyse oder die Infusionstechnik. Derartige Lösungsbeutel werden hergestellt, indem Beutelrohlinge mit einem Anschlussstück, beispielsweise einem sogenannten Schiffchen, versehen werden, und die mit dem Anschlussstück versehenen Beutel mit einer Lösung befüllt werden. Der Produktionsschritt der Befüllung des Beutels mit der Lösung stellt dabei den Schritt mit der längsten Prozesszeit dar. Die Prozesszeit der Befüllung wird durch den Durchmesser einer zur Befüllung verwendeten Füllnase und den Innendruck der Lösung begrenzt.

Nachfolgend wird ein Ausführungsbeispiel der Erfindung unter Bezugnahme auf die Zeichnungen näher erläutert.

Es zeigen:

Fig. 1 eine stark vereinfachte schematische Darstellung der erfindungsgemäßen Transporteinrichtung,
Fig. 2 ein Blockschaltbild der Transporteinrichtung,
Fig. 3 den ersten Arbeitsschritt des Herstellungsverfahrens in schematischer Draufsicht,
Fig. 4 den zweiten Arbeitsschritt des Herstellungsverfahrens in schematischer Draufsicht,
Fig. 5 den dritten Arbeitsschritt des Verfahrens in schematischer Draufsicht,
Fig. 6 den vierten Arbeitsschritt des Verfahrens in schematischer Draufsicht,
Fig. 7 den fünften Arbeitsschritt des Verfahrens in schematischer Draufsicht,
Fig. 8 einen kleinen Arbeitstakt des sechsten Arbeitsschrittes des Verfahrens in schematischer Draufsicht,
Fig. 9 einen großen Arbeitstakt des sechsten Arbeitsschrittes des Verfahrens in schematischer Draufsicht,
Fig. 10 ein Ausführungsbeispiel der erfindungsgemäßen Transporteinrichtung in der Draufsicht,
Fig. 11 eine Teilansicht der Transporteinrichtung von Fig. 10 in vergrößerter Darstellung,
Fig. 12 eine Umschalteinrichtung eines Objekt-Trägerelements der Transporteinrichtung in perspektivischer Darstellung,

Fig. 13    eine Seitenansicht der Umschalteinrichtung eines Objekt-Trägerelements,

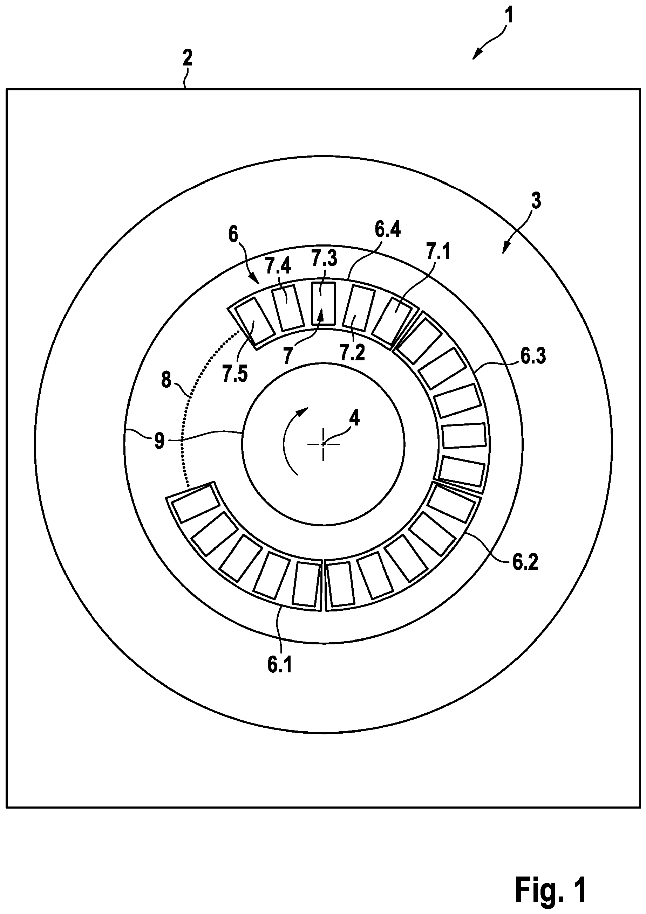

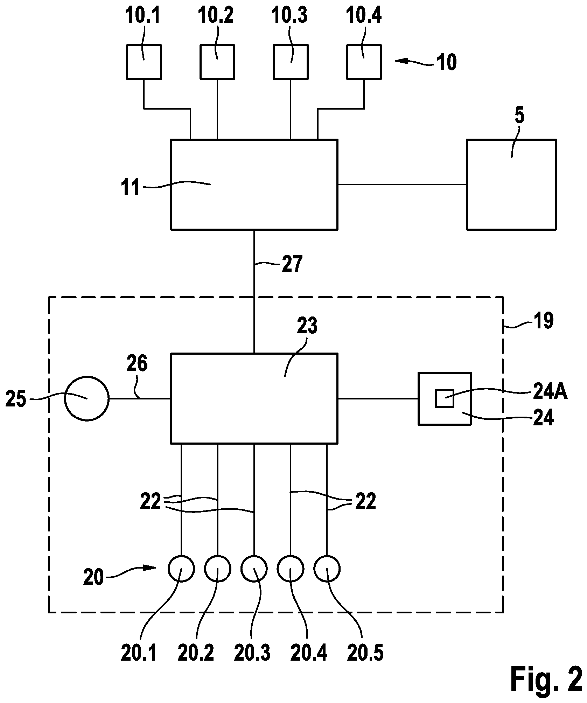

Fig. 1 zeigt eine schematische Darstellung der erfindungsgemäßen Transporteinrichtung, die nur der Veranschaulichung des Funktionsprinzips der Transporteinrichtung dient. Fig. 2 zeigt ein Blockschaltbild der Transporteinrichtung.

Die Transporteinrichtung 1, die als Rundschalttisch ausgebildet ist, weist eine ortsfeste Baugruppe 2 (Stator) auf, die einen Objektträger 3 aufnimmt, der um eine vertikale Drehachse 4 von einer in Fig. 1 nicht dargestellten Antriebseinheit 5 (Fig. 2) drehbar ist. In Fig. 1 steht die Drehachse des Objektträgers 3 senkrecht auf der Bildebene. Die Antriebseinheit 5 dreht den Objektträger 3 in aufeinanderfolgenden Arbeitstakten schrittweise um fest vorgegebene Drehwinkel.

Dem Objektträger 3 ist eine Mehrzahl von Objekt-Trägerelementen 6 zugeordnet. Bei dem vorliegenden Ausführungsbeispiel sind dem Objektträger 3 vier Objekt-Trägerelemente 6.1, 6.2, 6.3, 6.4 zugeordnet. Die Objekt-Trägerelemente 6 weisen jeweils eine Mehrzahl von Aufnahmeelementen 7 auf. Bei dem vorliegenden Ausführungsbeispiel weisen die Objekt-Trägerelemente 6 jeweils fünf Aufnahmeelemente 7.1, 7.2, 7.3, 7.4, 7.5 auf. Jedes Aufnahmeelement kann ein Objekt aufnehmen. Es ist aber auch möglich, dass jedes Objekt-Trägerelement 6 nur ein Aufnahmeelement aufweist, wobei es auch möglich ist, dass ein Aufnahmeelement 7 auch mehrere Objekte aufnimmt. Die Aufnahmeelemente können beispielsweise Schalen, Ständer, Halterungen oder dergleichen sein.

Die umfangsmäßig verteilt angeordneten Objekt-Trägerelemente 6 beschreiben jeweils die Form eines Kreissegments. Die Objekt-Trägerelemente 6 sind in einer nur schematisch dargestellten Führung 9 auf einer kreisförmigen Bewegungsbahn 8 verschiebbar geführt. Sie könnten sich daher relativ zum Objektträger bewegen, wenn sie nicht an den Objektträger oder die ortsfeste Baugruppe gekoppelt wären.

Bei dem vorliegenden Ausführungsbeispiel haben die einzelnen Objekt-Trägerelemente 6 einen Umfangswinkel von jeweils 360°/5 = 72°. Da nur vier Objekt-Trägerelemente 6.1, 6.2, 6.3, 6.4 vorgesehen sind, bleibt ein Abschnitt der Kreisbahn 8 frei. Dieser Freiraum (Lücke) erlaubt ein Verschieben der Objekt-Trägerelemente 6 relativ zum Objektträger 3, ohne dass die Objekt-Trägerelemente kollidieren. Die Anzahl der Objekt-Trägerelemente 6 und der Umfangswinkel der Objekt-Trägerelemente 6 sind von der Anordnung und Anzahl der Arbeitsstationen abhängig.

Die Transporteinrichtung 1 ist Teil einer Produktionsanlage, die über eine Mehrzahl von Arbeitsstationen verfügt, die um den Objektträger 3 der Transporteinrichtung 1 umfangsmäßig verteilt angeordnet sind. In Fig. 1 sind die Arbeitsstationen nicht dargestellt. Bei dem vorliegenden Ausführungsbeispiel sind vier Arbeitsstationen vorgesehen.

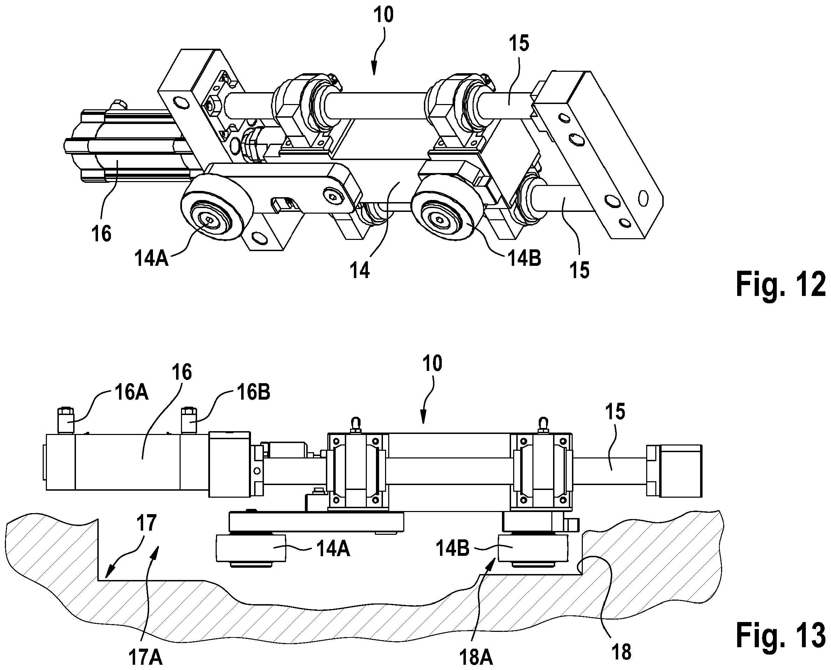

Den Objekt-Trägerelementen 6 ist jeweils eine in Fig. 1 nicht dargestellte Umschalteinrichtung 10 zugeordnet, die sich mit dem Objekt-Trägerelement dreht. Die Umschalteinrichtungen 10 werden unter Bezugnahme auf die Figuren 12 und 13 noch im Einzelnen beschrieben. Bei dem vorliegenden Ausführungsbeispiel sind vier Umschalteinrichtungen 10.1, 10.2, 10.3, 10.4 vorgesehen (Fig. 2).

Die Umschalteinrichtungen 10 sind derart ausgebildet, dass die einzelnen Objekt-Trägerelemente 6 entweder an den sich drehenden Objektträger 3 oder an die ortsfeste Baugruppe 2 gekoppelt werden können. Die Umschalteinrichtungen 10 lassen nur zwei Schaltstellungen zu. Wenn ein Objekt-Trägerelement 6 an die ortsfeste Baugruppe 2 gekoppelt ist, wird das Objekt-Trägerelement 6 von dem Objektträger 3 nicht mitgenommen, so dass das Objekt-Trägerelement 6 seine Position beibehält. Dies wird als erste Schaltstellung bezeichnet. Wenn ein Objekt-Trägerelement 6 hingegen an den Objektträger 3 gekoppelt ist, wird das Objekt-Trägerelement 6 von dem Objektträger 3 mitgenommen. Dies wird als zweite Schaltstellung bezeichnet.

Darüber hinaus verfügt die Transporteinrichtung 1 über eine Steuereinrichtung 11 (Fig. 2) für die Antriebseinheit 5 und die Umschalteinrichtungen 10. Die Steuereinrichtung 11 ist derart konfiguriert, dass die Antriebeinheit 5 und die Umschalteinrichtungen 10 für die Durchführung der einzelnen Arbeitsschritte angesteuert werden.

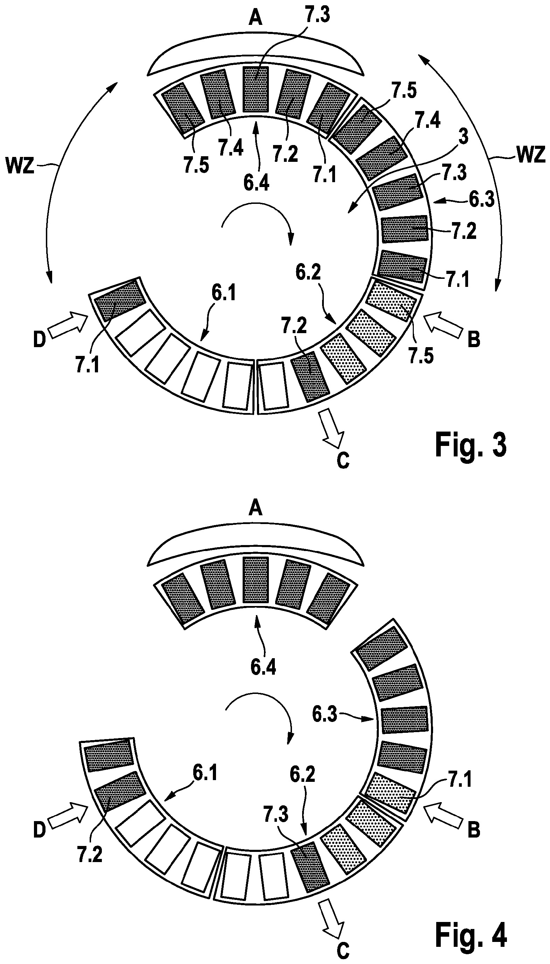

Die Figuren 3 bis 9 zeigen die einzelnen Arbeitsschritte eines Verfahrens zur Herstellung eines Produktes. Bei dem vorliegenden Ausführungsbeispiel ist das Herstellungsverfahren ein Verfahren zur Herstellung von mit einem medizinischen Produkte befüllten Behältnissen, insbesondere von mit einer medizinischen Lösung befüllten Beuteln, insbesondere Folienbeutel für die Peritonealdialyse. Die Figuren 3 bis 9 dienen nur zur Veranschaulichung des Grundprinzips des Verfahrens. Daher sind nicht sämtliche Verfahrensschritte dargestellt, die zur Herstellung der Produkte erforderlich sind.

Die Produktionsanlage umfasst mindestens eine der unter Bezugnahme auf Fig. 1 beschriebenen Transporteinrichtung 1. Fig. 3 zeigt in schematischer Darstellung nur die vier Objekt-Trägerelemente 6.1, 6.2, 6.3, 6.4 der Transporteinrichtung (Drehschalttisch). Die Produktionsanlage weist bei dem vorliegenden Ausführungsbeispiel vier nur andeutungsweise dargestellte Arbeitsstationen A, B, C, D auf, die umfangsmäßig verteilt um den Objektträger 3 angeordnet sind. Die Behältnisse, insbesondere Folienbeutel, werden als Rohlinge bereitgestellt, die nicht mit einem Anschlussstück, insbesondere einem Einschweissschiffchen, versehen und nicht mit dem medizinischen Produkt, insbesondere einer Flüssigkeit, beispielsweise einer Lösung für die Peritonealdialyse, befüllt sind. Die Arbeitsstation A ist eine Füllstation, mit der die mit dem Anschlussstück versehenen Beutel befüllt werden. Das Befüllen der Beutel ist ein Arbeitsprozess mit einer langen Prozesszeit. Die Prozesszeit ist deutlich länger als die Prozesszeit der anderen Arbeitsstationen. Die Arbeitsstation B mit einer kurzen Prozesszeit ist eine Arbeitsstation, mit der die Beutelrohlinge mit den Anschlussstücken bestückt werden. Die Arbeitsstation C ist eine Arbeitsstation zur Entnahme der mit dem Anschlussstück versehenen und befüllten Beutel, und die Arbeitsstation D ist eine Arbeitsstation zum Auflegen der Beutelrohlinge. Die Arbeitsstationen B, C, D haben eine Prozesszeit, die kürzer als die Prozesszeit der Arbeitsstation A ist.

Die Antriebseinheit 5 dreht den Objektträger 3 schrittweise in aufeinanderfolgenden kurzen oder langen Arbeitstakten im Uhrzeigersinn. Bei dem vorliegenden Ausführungsbeispiel wird der Objektträger 3 in einem kurzen Arbeitstakt um 14,4° im Uhrzeigersinn gedreht (360°/ 5 (5 Trägerelemente)/5 (5 Aufnahmeelemente 7.1, 7.2, 7.3, 7.4, 7.5 pro Trägerelement = 14,4°). Die Umschalteinrichtungen 10 sind in den Figuren 3 bis 9 nicht dargestellt.

Das beschriebene Verfahren zeichnet sich durch eine Kombination aus Einzeltakten für die Arbeitsstationen B, C, D mit kurzer Prozesszeit und Vielfachtakten für die Arbeitsstation A mit langer Prozesszeit aus. Dafür ist das Auffangen der Einzeltakte vor der Arbeitsstation A mit langer Prozesszeit und das Auffangen des Vielfachtaktes nach der Arbeitsstation A mit langer Prozesszeit erforderlich. Das Auffangen der Einzeltakte und des Vielfachtaktes erfolgt in Wartezonen WZ in Drehrichtung (im Uhrzeigersinn) vor und hinter der Arbeitsstation A mit langer Prozesszeit. Nachfolgend werden die einzelnen Arbeitsschritte beschrieben.

Fig. 3 zeigt den ersten Arbeitsschritt (Ausgangsposition). Die vier Objekt-Trägerelemente 6.1, 6.2, 6.3, 6.4 sind derart angeordnet, dass sich in der Wartezone WZ vor der Arbeitsstation A mit langer Prozesszeit im ersten Arbeitsschritt kein Objekt-Trägerelement befindet. Die Beutelrohlinge befinden sich in den Aufnahmeelementen 7.1, 7.2, 7.3, 7.4, 7.5 des dritten und vierten Objekt-Trägerelements 6.3, 6.4. Die Wartezone WZ vor der Arbeitsstation A mit langer Prozesszeit ist leer und die Wartezone WZ hinter der Arbeitsstation A ist voll. Die Arbeitsstation A für den Füllprozess mit der langen Prozesszeit und die Arbeitsstationen B, C, D für die Arbeitsprozesse mit den kurzen Arbeitszeiten sind im Betrieb. Die Arbeitsstation B bestückt den in dem fünften Aufnahmeelement 7.5 des zweiten Objekt-Trägerelements 6.2 befindlichen befüllten Beutel mit einem Anschlussstück, beispielsweise mit einer Abdeckkappe. Die Arbeitsstation C entnimmt den in dem zweiten Aufnahmeelement 7.2 des zweiten Objekt-Trägerelements 6.2 befindlichen mit dem Anschlussstück versehenen und mit der Lösung befüllten, fertigen Beutel und die Arbeitsstation D bestückt das erste Aufnahmeelement 7.1 des ersten Objekt-Trägerelements 6.1 mit einem Beutelrohling.

Fig. 4 zeigt den zweiten Arbeitsschritt. Die Steuereinrichtung 11 steuert die Umschalteinrichtungen 10 derart an, dass die dem ersten, zweiten und dritten Objekt-Trägerelement 6.1, 6.2, 6.3 zugeordneten Umschalteinrichtungen 10. 1, 10. 2, 10.3 in die zweite Schaltstellung geschaltet sind, während die dem vierten Objekt-Trägerelement 6.4 zugeordnete Umschalteinrichtung 10.4 in die erste Schaltstellung geschaltet ist. Folglich werden das erste, zweite und dritte Objekt-Trägerelement 6.1, 6.2, 6.3 bei einer Drehung des Objektträgers 3 im Uhrzeigersinn mitgenommen und das vierte Objekt-Trägerelement 6.4 arretiert. Nachdem sich der Objektträger 3 um einen vorgegebenen Drehwinkel (360°/(5 x 5) = 14,4°) gedreht hat, ist die Wartezone WZ vor dem langen Prozess mit einem Beutelrohling einfach bestückt und die Wartezone WZ nach dem langen Prozess vierfach mit befüllten Beuteln belegt. Die Arbeitsstation B bestückt den in dem ersten Aufnahmeelement 7. 1 des dritten Objekt-Trägerelements 6.3 befindlichen befüllten Beutel mit einem Anschlussstück. Die Arbeitsstation C entnimmt den in dem dritten Aufnahmeelement 7.3 des zweiten Objekt-Trägerelements 6.2 befindlichen mit dem Anschlussstück versehenen und mit der Lösung befüllten, fertigen Beutel und die Arbeitsstation D bestückt das zweite Aufnahmeelement 7.2 des ersten Objekt-Trägerelements 6.1 mit einem Beutelrohling.

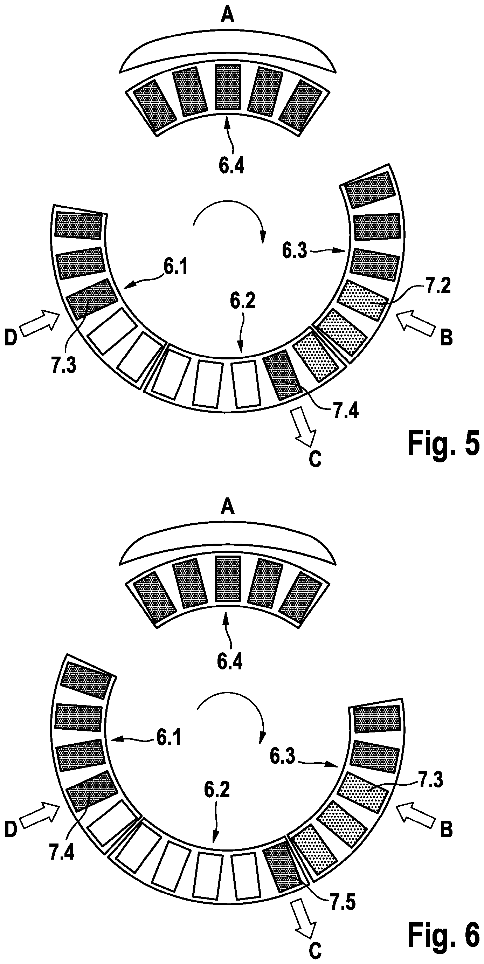

Im dritten Arbeitsschritt (Fig. 5) steuert die Steuereinrichtung die Umschalteinrichtungen 10 wieder derart an, dass das erste, zweite und dritte Objekt-Trägerelement 6.1, 6.2, 6.3 mitgenommen und das vierte Objekt-Trägerelement 6.4 festgehalten wird. Der Objektträger 3 dreht sich wieder um einen vorgegebenen Drehwinkel (14,4°). Nach der Drehung des Objektträgers 3 ist die Wartezone WZ vor dem langen Prozess zweifach mit Beutelrohlingen bestückt und die Wartezone nach dem langen Prozess dreifach mit befüllten Beuteln belegt. Die Arbeitsstation B bestückt jetzt den im zweiten Aufnahmeelement 7.2 des dritten Objekt-Trägerelements 6.3 befindlichen befüllten Beutel mit einem Anschlussstück. Die Arbeitsstation C entnimmt den fertigen Beutel aus dem vierten Aufnahmeelement 7.4 des zweiten Objekt-Trägerelements 6.2 und die Arbeitsstation D bestückt das dritte Aufnahmeelement 7.3 des ersten Objekt-Trägerelements 6.1 mit einem Beutelrohling.

Im vierten Arbeitsschritt (Fig. 6) werden wieder das erste, zweite und dritte Objekt-Trägerelement 6.1, 6.2, 6.3 mitgenommen, während das vierte Objekt-Trägerelement 6.4 festgehalten wird. Nach der Drehung des Objekt-Trägerelements um den vorgegebenen Drehwinkel (14,4°) ist die Wartezone WZ vor dem langen Prozess dreifach mit Beutelrohlingen und die Wartezone WZ nach dem langen Prozess zweifach mit befüllten Beuteln belegt. Die Arbeitsstation B bestückt den in dem dritten Aufnahmeelement 7.3 des dritten Objekt-Trägerelements 6.3 befindlichen befüllten Beutel mit einem Anschlussstück, die Arbeitsstation B entnimmt den fertigen Beutel aus dem fünften Aufnahmeelement 7.5 des zweiten Objekt-Trägerelements 6.2 und die Arbeitsstation D beschickt das vierte Aufnahmeelement 7.4 des ersten Objekt-Trägerelements 6.1 mit einem Beutelrohling.

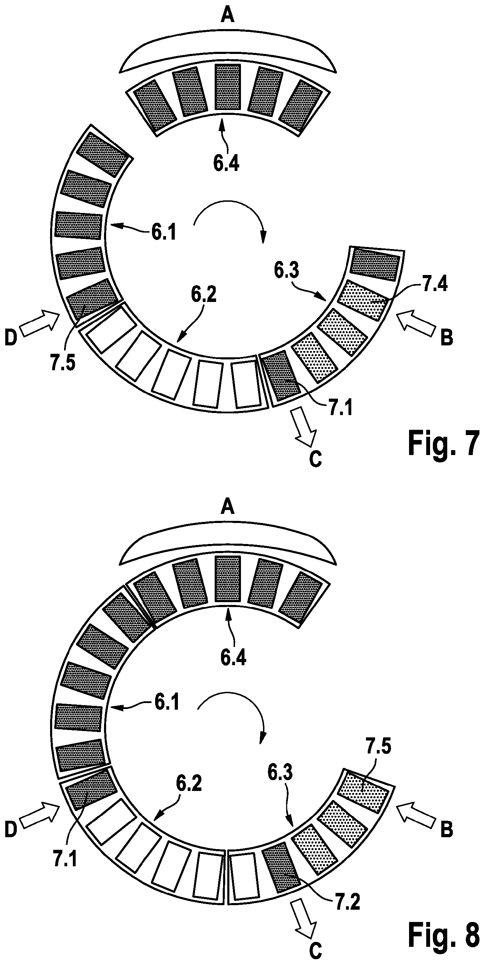

Im fünften Arbeitsschritt (Fig. 7) werden das erste, zweite und dritte Objekt-Trägerelement 6.1, 6.2, 6.3 mitgenommen, während das vierte Objekt-Trägerelement 6.4 festgehalten wird. Nach einer Drehung des Objektträgers 3 um den vorgegebenen Drehwinkel (14,4°) ist die Wartezone WZ vor dem langen Prozess vierfach mit Beutelrohlingen bestückt und die Wartezone WZ nach dem langen Prozess einfach mit befüllten Beuteln belegt. Der in dem vierten Aufnahmeelement 7.4 des dritten Objekt-Trägerelements 6.3 befindliche befüllte Beutel wird mit dem Anschlussstück bestückt, der in dem ersten Aufnahmeelement 7.1 des dritten Objekt-Trägerelements 6.3 befindliche fertige Beutel wird entnommen und das fünfte Aufnahmeelement 7.5 des ersten Objekt-Trägerelements 6.1 wird mit einem Beutelrohling beschickt.

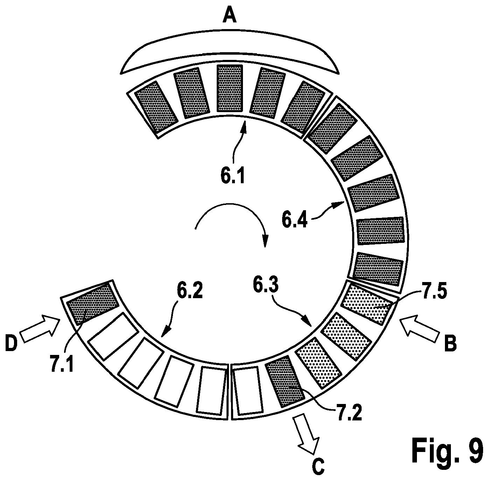

Nunmehr schließt sich der sechste Arbeitsschritt an, der einen kleinen Takt (Fig. 8) mit einer Drehung des Objektträgers um einen Drehwinkel von 14,4° und einen großen Takt (Fig. 9) mit einer Drehung des Objektträgers 3 um einen Drehwinkel von 72° (5* 14,4°=72°) umfasst. In dem kleinen Takt werden das erste, zweite und dritte Objekt-Trägerelement 6.1, 6.2, 6.3 mitgenommen und das vierte Objekt-Trägerelement 6.4 festgehalten. Nach der Drehung des Objektträgers um 14,4° (kleiner Takt) ist die Wartezone WZ vor dem langen Prozess voll und die Wartezone WZ nach dem langen Prozess leer. Der in dem fünften Aufnahmeelement 7.5 des dritten Objekt-Trägerelements 6.3 befindliche befüllte Beutel wird mit einem Anschlussstück bestückt, der fertige Beutel wird aus dem zweiten Aufnahmeelement 7.2 des dritten Objekt-Trägerelements 6.1 entnommen und das erste Aufnahmeelement 7.1 des zweiten Objekt-Trägerelements 6.2 wird mit einem Beutelrohling beschickt.

In dem sich an den kleinen Takt anschließenden großen Takt (Fig. 9) des sechsten Arbeitsschrittes steuert die Steuereinheit 11 die Umschalteinrichtung 10 derart an, dass das erste und vierte Objekt-Trägerelement 6.1, 6.4 mitgenommen und das zweite und dritte Objekt-Trägerelement 6.2, 6.3 festgehalten wird. Der Objektträger 3 dreht sich im großen Takt um 72° (5* 14,4°=72°). Nach der Drehung des Objektträgers 3 ist die Wartezone WZ vor dem langen Prozess leer und die Wartezone WZ nach dem langen Prozess voll, so dass sich wieder der erste Arbeitsschritt (Fig. 3) anschließen kann.

Im sechsten Arbeitsschritt ist die Summe aus der Taktzeit kurzer Takt $t_{TK}$ und der Taktzeit langer Takt $t_{TL}$ kleiner als die Gesamtprozesszeit kurzer Takt $t_{GK}$ ($t_{TK}+t_{TL}<t_{GK}$).

Der oben beschriebene Prozess entspricht einer 5-fach Parallelschaltung des längsten Prozesses.

Bei der Auslegung der Produktionsanlage ergeben sich die folgenden Gesetzmäßigkeiten:

| | |
|---|---|
| $t_{PK}$ | Prozesszeit kurzer Prozess |
| $t_{PL}$ | Prozesszeit langer Prozess |
| $t_{TK}$ | Taktzeit kurzer Takt |
| $t_{TL}$ | Taktzeit langer Takt |
| $t_{GK}$ | Gesamtprozesszeit kurzer Takt |
| $t_{GL}$ | Gesamtprozesszeit langer Takt |
| S | Skalierfaktor |
| WZ | Wartezone |
| $A_{OTE}$ | Anzahl Objekt-Trägerelemente |
| $A_{WZ}$ | Anzahl Wartezonen |
| LP | Prozess mit langer Prozesszeit |
| KP | Prozess mit kurzer Prozesszeit |

Gesamtprozesszeit kurzer Takt:

$$t_{GK}=t_{PK}+t_{TK}$$

Kurzer und langer Takt müssen zwingend innerhalb der Taktzeit des kurzen Taktes liegen:

$$t_{TK}+t_{TL}<t_{GK}$$

Gesamtprozesszeit langer Takt:

$$t_{GL}=t_{PL}+t_{TLK}$$

Berechnung der notwendigen Vervielfachung des längsten Prozessschrittes:

$$t_{GL}/t_{GK}=S$$

Je nach Festlegung, welcher Anlagenteil Engpass der gesamten Anlage sein soll, muss S auf- oder abgerundet werden.

Anzahl gekoppelter Objektträger pro Kreissegment:

$$S*\text{Objektträger}=\text{Objekt-Trägerelement}$$

Anzahl Objekt-Trägerelemente pro System:

$$A_{OTE}\geq 2 \ (1 \text{ x kurzer Prozess, 1 x langer Prozess})$$

Anzahl WZ pro System:
$A_{WZ}\geq 2$ (pro Wechsel von kurzem Prozess zu langem Prozess WZ notwendig, pro Wechsel von langem Prozess zu kurzem Prozess WZ notwendig)

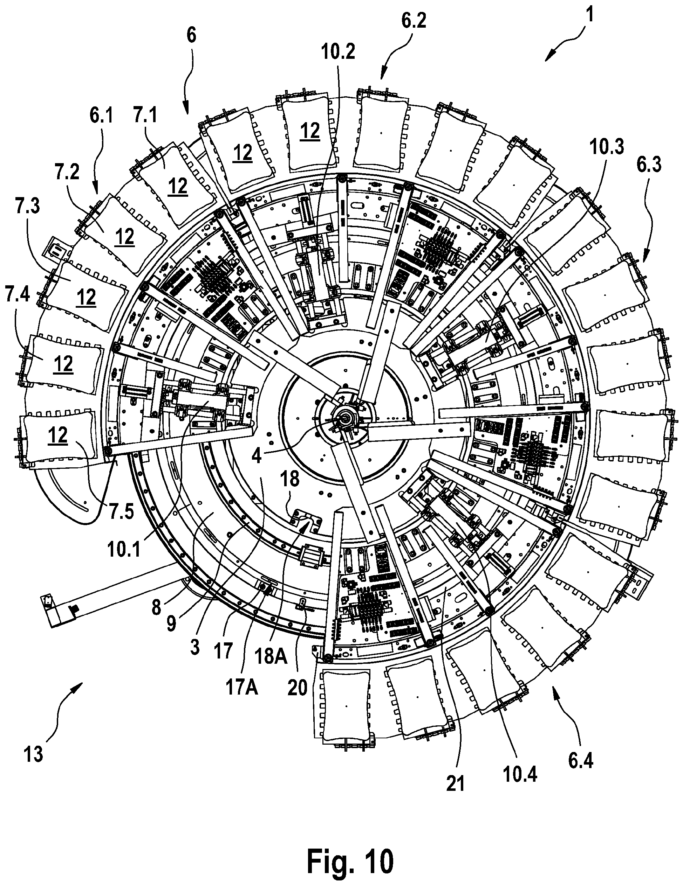

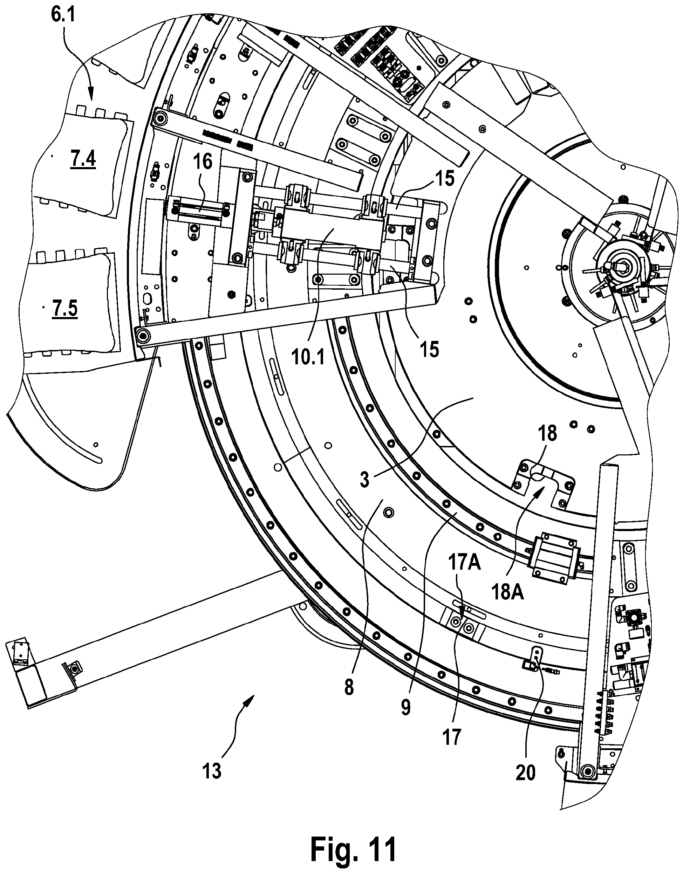

Fig. 10 zeigt ein Ausführungsbeispiel der erfindungsgemäßen Transporteinrichtung 1 in der Draufsicht auf, während Fig. 11 eine Teilansicht von Fig. 10 in vergrößerter Darstellung zeigt. Die Figuren 12 und 13 zeigen die Umschalteinrichtung 10 in perspektivischer Darstellung und in der Seitenansicht. Die einzelnen Komponenten der Transporteinrichtung 1 sind in den Figuren 10 bis 13 mit den gleichen Bezugszeichen wie in den Figuren 1 bis 9 bezeichnet. Die in den Figuren 10 bis 13 gezeigte Transporteinrichtung hat den gleichen Aufbau wie die unter Bezugnahme auf die Figuren 1 bis 9 beschriebene Transporteinrichtung. Nachfolgend werden nur die für die Erfindung relevanten Komponenten der Transporteinrichtung beschrieben.

In Fig. 10 sind die Objekt-Trägerelemente 6.1, 6.2, 6.3, 6.4 zu erkennen, die in einer Führung 9 geführt sind. In den Aufnahmeelementen 7.1, 7.2, 7.3, 7.4, 7.5 der Objekt-Trägerelemente 6.1, 6.2, 6.3, 6.4 liegen jeweils ein Beutel 12. Jedem Objekt-Trägerelement 6.1, 6.2, 6.3, 6.4 ist eine Umschalteinrichtung 10.1, 10.2, 10.3, 10.4 zugeordnet, die an dem Objekt-Trägerelement befestigt ist.

Die Objekt-Trägerelemente 6.1, 6.2, 6.3, 6.4 könnten sich, wenn sie nicht an die ortsfeste Baugruppe 2 oder den Objektträger 3 gekoppelt wären, in der Führung 9 auf einer Kreisbahn 8 frei bewegen. Die Objekt-Trägerelemente 6.1, 6.2, 6.3, 6.4 und der Objektträger 3 können aus mehreren Teilen bestehen. Entscheidend ist, dass sich der Objektträger 3 gegenüber der ortsfesten Baugruppe dreht und sich die Objekt-Trägerelemente 6.1, 6.2, 6.3, 6.4 relativ zu der ortfesten Baugruppe 2 oder dem Objektträger 3 frei bewegen könnten, wenn sie nicht durch die Umschalteinrichtung 10.1, 10.2, 10.3, 10.4 an die ortsfeste Baugruppe 2 oder den Objektträger 3 gekoppelt wären. Die Objekt-Trägerelemente 6.1, 6.2, 6.3, 6.4 können den Objektträger 3 umfangsmäßig umschließen.

Die Objekt-Trägerelemente 6.1, 6.2, 6.3, 6.4 bilden eine Reihe, wobei in der in Fig. 10 dargestellten Position zwischen dem ersten und dem vierten Objekt-Trägerelement 6.1, 6.4 eine Lücke 13 ist. Die Objekt-Trägerelemente 6.1, 6.2, 6.3, 6.4 können bei dem vorliegenden Ausführungsbeispiel fünf unterschiedliche Positionen einnehmen.

Die Schalteinrichtung 10 weist ein aus mehreren Teilen bestehendes Koppelelement 14 auf, das an Führungselementen 15 längsverschiebbar geführt ist. Die Führungselemente 15 können Führungswagen sein. Derartige Linearführungen gehören zum Stand der Technik. Das Koppelelement 14 weist ein erstes Eingriffelement 14A und ein zweites Eingriffelement 14B auf, die auf einer gemeinsamen Längsachse im Abstand zueinander angeordnet sind. Die Eingriffelemente 14A, 14B können einen kreisförmigen Querschnitt haben. Sie können Lager mit einem Innen- und Außenring sein, beispielsweise Wälzlager.

Zum Verschieben des Koppelelements 14 auf einer Längsachse ist ein Aktor 16 vorgesehen, der bei dem vorliegenden Ausführungsbeispiel eine doppelt wirkender Kolben/Zylinderanordnung ist. Eine Druckbeaufschlagung der einen Kolbenfläche führt zu einer Bewegung in die eine Richtung und eine Druckbeaufschlagung der anderen Kolbenfläche zu einer Bewegung in die andere Richtung. Das Druckmittelmedium wird der Kolben/Zylinderanordnung an den Anschlüssen 16A, 16B über nicht dargestellte Versorgungsleitungen zugeführt.

Dem ersten Eingriffelement 14A ist eine der Anzahl der Positionen entsprechende Anzahl von Ausnehmungen 17 zugeordnet, die an der ortsfesten Baugruppe 2 in gleichbleibenden Abständen umfangsmäßig verteilt angeordnet sind. Diese Ausnehmungen 17 weisen radial zu der Drehachse nach innen weisende Öffnungen 17A auf. Dem zweiten Eingriffelement 14B ist auch eine der Anzahl der Positionen entsprechende Anzahl von Ausnehmungen 18 zugeordnet, die an dem Objektträger 3 in gleichbleibenden Abständen umfangsmäßig verteilt angeordnet sind. Diese Ausnehmungen 18 weisen radial nach außen weisende Öffnungen 18A auf. Bei dem vorliegenden Ausführungsbeispiel sind jeweils fünf Ausnehmungen 17 bzw. 18 vorgesehen.

Die Figuren 10 und 11 zeigen exemplarisch für die fünf Positionen eine Ausnehmung 17 an einem Teil des Objektträgers 3 und eine Ausnehmung 18 an einem Teil der ortsfesten Baugruppe 2. Die Ausnehmungen 17, 18 können unterschiedlich ausgebildet sein. Sie können beispielsweise von seitlichen Wänden begrenzte Taschen sein. Die Taschen brauchen an der Oberseite und Unterseite nicht geschlossen zu sein.

In der ersten Schaltstellung greift das erste Eingriffelement 14A in eine Ausnehmung 17 der ortsfesten Baugruppe 2, während in der zweiten Schaltstellung das zweite Eingriffelement 14B in eine Ausnehmung 18 des Objektträges 3 greift. Der Abstand der Eingriffelemente 14A, 14B ist derart bemessen, das immer nur eines der beiden Eingriffelemente mit einer der Ausnehmungen 17, 18 in Eingriff ist. Folglich wird das betreffende Objekt-Trägerelement 6.1, 6.2, 6.3, 6.4 entweder von dem Objektträger 3 mitgenommen oder wird an der ortsfesten Baugruppe 2 arretiert. Die Ankopplung kann nur in einer der fünf Positionen erfolgen, die durch die Anordnung der Ausnehmungen festgelegt ist. Folglich ist sind auch die Stellungen festgelegt, in denen sich die Objekt-Trägerelemente 6.1, 6.2, 6.3 in Bezug auf den Objektträger 3 befinden können. Undefinierte Zwischenpositionen können die Objekt-Trägerelemente nicht einnehmen.

Die Steuereinrichtung 11 steuert die Kolben/Zylinderanordnungen der Umschalteinrichtungen 10 derart an, dass die Objekt-Trägerelemente 6.1, 6.2, 6.3, 6.4 zur Durchführung der einzelnen Verfahrensschritte in die einzelnen Positionen bewegt werden (Figuren 3 bis 9).

Die Transporteinrichtung 1 verfügt weiterhin über eine Einrichtung 19 zur Bestimmung der Position der Objekt-Trägerelemente 6.1, 6.2, 6.3, 6.4. Aufgrund der Zwangskopplung der Objekt-Trägerelemente 6.1, 6.2, 6.3 entweder an die ortsfeste Baugruppe 2 oder den Objektträger 3 kann die Einrichtung 19 zur Bestimmung der Position der Objekt-Trägerelemente einen besonders einfachen Aufbau haben. Die Positionsbestimmung kann auf der Grundlage der Auswertung von nur jeweils zwei Zuständen erfolgen.

Die Einrichtung 19 zur Bestimmung der Position der Objekt-Trägerelemente 6 weist eine der Anzahl der Positionen entsprechende Anzahl von Positionssensoren 20, 20.1, 20.2, 20.3, 20.4, 20.5 auf, die unterhalb der Objekt-Trägerelemente 6 an der ortsfesten Baugruppe 2 in gleichbleibenden Abständen umfangsmäßig verteilt angeordnet sind. Die Figuren 11 und 12 zeigen exemplarisch für der fünf Positionen einen Sensor 20. An den Objekt-Trägerelementen 6 ist jeweils ein Markierungselement 21 angeordnet. In Fig. 10 ist die Position des Markierungselements 21 eines Objekt-Trägerelements 6 nur andeutungsweise gezeigt.

Die Positionssensoren 20 sind über Signalleitungen 22 mit einer Auswerteinheit 23 der Einrichtung 19 zur Bestimmung der Position der Objekt-Trägerelemente verbunden. Die Positionssensoren 20 können induktive Sensoren und die Markierungselemente 21 können Metallkörper sein, die von den Positionssensoren erkannt werden. Wenn die Positionssensoren ein Markierungselement erkennen, erzeugen sie ein Positionssignal, das die Auswerteeinheit 23 über die Signalleitung 22 empfängt.

Darüber hinaus weist die Einrichtung 19 zur Bestimmung der Position der Objekt-Trägerelemente eine Eingabeeinheit 24 auf, die beispielsweise über eine Tastatur 24A verfügen kann. Mit der Eingabeeinheit 24 kann der Bediener die Position des ersten Objekt-Trägerelements 6.1 in Bezug auf eine dem Objekt-Trägerelement zugeordnete Arbeitsstation A, B, C, D (Figuren 3 bis 9) eingeben.

Die Drehstellung des Objektträgers 3 wird mit einem Drehwertgeber 25 erfasst, der über eine Signalleitung 26 mit der Auswerteeinheit 23 verbunden ist. Der Drehwertgeber 25 erzeugt in Abhängigkeit von der Drehstellung des Objektträgers 3 ein Drehstellungssignal, das die Auswerteeinheit 23 empfängt.

Nach einem Stromausfall beispielsweise muss das System neu initialisiert werden, da sämtliche Positionsdaten verloren sind. Hierfür stellt die Einrichtung 19 zur Bestimmung der Position der Objekt-Trägerelemente 6 der Steuereinheit 11 einen Datensatz zur Verfügung, den die Steuereinheit 11 über eine Datenleitung 27 empfängt. Auf der Grundlage dieses Datensatzes kann die Steuereinheit 11 eine Initialisierung des Systems vornehmen.

Die Reihenfolge der Objekt-Trägerelemente 6 kann sich nicht ändern. Insofern ist das System bestimmt. Aber es ist nicht bekannt, wo sich das erste Objekt-Trägerelement 6.1 befindet und wo die Lücke 13 zwischen den Objekt-Trägerelementen liegt. Wenn die Position des ersten Objekt-Trägerelements 6.1 bekannt ist und die Lage der Lücke 13 bekannt ist, ist das System für die Initialisierung vollständig bestimmt.

Die Positionserfassung setzt voraus, dass die Positionssensoren 20 mit den Markierungselementen 21 zur Deckung gebracht werden können, d. h. sich die Markierungselemente 21 oberhalb der Sensoren 20 befinden. Dies ist aber nur dann möglich, wenn sich die Objekt-Trägerelemente 6 in einer definierten Position befinden, bei der auch umgeschaltet werden kann. Dies ist dann der Fall, wenn die Objekt-Trägerelemente 6 an den Objektträger 3 angekoppelt sind. Daher wird zunächst eine Grundstellungsfahrt durchgeführt, bei der sämtliche Umschalteinrichtungen 10 in die zweite Schaltstellung geschaltet sind, so dass sämtliche Objekt-Trägerelemente 6 an den Objektträger 3 angekoppelt werden. Hierzu wird der Objektträger 3 um vorgegebene Winkel gedreht, bis die Eingriffelemente 14A in die entsprechenden Ausnehmungen 17 greifen können, wobei der Drehwertgeber 25 die jeweilige Drehstellung erfasst, beispielsweise 72°.

Die Auswerteeinheit 23 ist derart konfiguriert, dass aus den Positionssignalen der Positionssensoren 20 die Position bestimmt werden kann, an der sich ein Objekt-Trägerelement 6 nicht befindet, d.h. wo eine Lücke 13 ist. Beispielsweise liefert der erste Positionssensor 20.1 das binäre Signal 1, wenn dieser ein Objekt-Trägerelement erkennt, der zweite Positionssensor 20.2 das Binärsignal 1, der dritte Positionssensor 20.3 das Binärsignal 1, der vierte Positionssensor 20.4 das Binärsignal 1 und der fünfte Positionssensor 20.5 das Binärsignal 0, da ein Objekt-Trägerelement nicht erkannt wird. Die Auswerteeinheit 23 empfängt die Signalfolge "1, 1, 1, 1, 0". Auf der Grundlage dieser Signalfolge erkennt die Auswerteeinheit 23, dass sich die Lücke "0" zwischen dem ersten und vierten Objekt-Trägerelement 6.1, 6.2 befindet. Bei einer Signalfolge "1, 1, 1, 0, 1" beispielsweise liegt die Lücke "0" zwischen dem zwischen dem dritten und vierten Objekt-Trägerelement 6.3, 6.4.

Von der Eingabeeinheit 24 empfängt die Auswerteeinheit 23 die Position des ersten Objekt-Trägerelements 6.1 in Bezug auf eine Arbeitsstation beschreibende Positionsdaten. Die Auswerteeinheit 23 wertet die Positionssignale der Positionssensoren 20 und die Positionsdaten der Eingabeeinheit 24 aus, und erzeugt ein die Position der Objekt-Trägerelemente beschreibenden Datensatz, der das System für die Initialisierung vollständig bestimmt.

**Patentansprüche**

1. Transporteinrichtung zum Transport von Objekten von Arbeitsstation zu Arbeitsstation einer Produktionsanlage mit einer ortfesten Baugruppe (2), einem um eine Drehachse in aufeinanderfolgenden Arbeitstakten drehbaren Objektträger (3), einer Mehrzahl von umfangsmäßig verteilt angeordneten relativ zum Objektträger (3) auf einer Kreisbahn (8) bewegbaren Objekt-Trägerelementen (6) zur Ablage von einem oder mehreren Objekten und einer Antriebeinheit (5) zum Antrieb des Objektträgers (3),

   **dadurch gekennzeichnet, dass**

   den Objekt-Trägerelementen (6) Koppelelemente (14) zugeordnet sind, die jeweils nur eine erste Schaltstellung oder eine zweite Schaltstellung einnehmen können, und den Koppelementen (14) Aktoren (16) zugeordnet sind, die derart ausgebildet sind, dass die Koppelelemente in die erste oder zweite Schaltstellung bewegt werden, wobei

   in der ersten Schaltstellung das Koppelelement (14) mit der ortsfesten Baugruppe (2) in Eingriff ist und mit dem drehbaren Objektträger (3) außer Eingriff ist, so dass das dem Koppelelement (14) zugeordnete Objekt-Trägerelement (6) an einer Arbeitsstation (A, B, C, D) verbleibt, und

   in der zweiten Schaltstellung das Koppelelement (14) mit der ortsfesten Baugruppe (2) außer Eingriff ist und mit dem drehbaren Objektträger (3) im Eingriff ist, so dass das dem Koppelelement (14) zugeordnete Objekt-Trägerelement (6) von Arbeitsstation zu Arbeitsstation (A, B, C, D) bewegt wird.

2. Transporteinrichtung nach Anspruch 1, **dadurch gekennzeichnet, dass** an der ortsfesten Baugruppe (2) eine vorgegebene Anzahl von umfangsmäßig verteilt angeordneten Ausnehmungen (17) vorgesehen sind und an dem drehbaren Objektträger (3) eine vorgegebene Anzahl von umfangsmäßig verteilt angeordneten Ausnehmungen (19) vorgesehen sind, wobei die Anzahl der Ausnehmungen (18) der ortsfesten Baugruppe der Anzahl der Ausnehmungen (19) des Objektträgers (3) entspricht, und das Koppelement (14) ein erstes Eingriffelement (14A) aufweist, das in der ersten Schaltstellung in eine der Ausnehmungen (17) der ortfesten Baugruppe (2) greift, und das Koppelement (14) ein zweites Eingriffelement (14B) aufweist, das in der zweiten Schaltstellung in eine der Ausnehmungen (18) des Objektträgers (3) greift, wobei das erste und zweite Eingriffelement (14A, 14B) fest miteinander verbunden sind.

3. Transporteinrichtung nach Anspruch 1 oder 2, **dadurch gekennzeichnet, dass** die Ausnehmungen (17) der ortfesten Baugruppe (2) radial nach innen weisende Öffnungen (17A) und die Ausnehmungen (18) des Objektträgers (3) radial nach außen weisende Öffnungen (18A) aufweisen, wobei das erste und zweite Eingriffelement (14A, 14B) in einer radialen Richtung derart verschiebbar geführt sind, dass in der ersten Schaltstellung das erste Eingriffelement (14A) in eine der Ausnehmungen (17) der ortfesten Baugruppe (2) und in der zweiten Schaltstellung das zweite Eingriffelement (14B) in eine der Ausnehmungen (18) des Objektträgers (3) greift.

4. Transporteinrichtung nach Anspruch 3, **dadurch gekennzeichnet, dass** die Koppelelemente (14) an Führungselementen (15) längsverschiebbar geführt sind, wobei die Aktoren (16) zum Bewegen der Koppelemente Kolben/ZylinderAnordnungen sind, die mit einem Druckmittelmedium beaufschlagbar sind, so dass die Koppelelemente (14) zwischen der ersten und zweiten Schaltstellung bewegbar sind.

5. Transporteinrichtung nach Anspruch 4, **dadurch gekennzeichnet, dass** die Kolben/Zylinder-Anordnungen doppelt wirkende Kolben/Zylinder-Anordnungen mit zwei gegenüberliegenden Kolbenflächen sind, die mit einem Druckmittelmedium beaufschlagbar sind.

6. Transporteinrichtung nach einem der Ansprüche 1 bis 5, **dadurch gekennzeichnet, dass** auf einem Abschnitt der Kreisbahn (8) ein Objekt-Trägerelement (6) nicht angeordnet ist und auf den anderen Abschnitten der Kreisbahn (8) jeweils ein Objekt-Trägerelement (6) angeordnet ist.

7. Transporteinrichtung nach einem der Ansprüche 1 bis 6, **dadurch gekennzeichnet, dass** eine Einrichtung (19) zur Bestimmung der Position der Objekt-Trägerelemente (6) vorgesehen ist, die den einzelnen Objekt-Trägerelementen zugeordnete Positionssensoren (20) aufweist, die umfangsmäßig verteilt angeordnet sind, wobei die Sensoren (20) derart ausgebildet sind, dass die Sensoren ein Positionssignal erzeugen, wenn sich ein Objekt-Trägerelement (6) in einer dem jeweiligen Sensor (20) zugeordneten Position befindet oder ein Objekt-Trägerelement (6) sich nicht in einer dem jeweiligen Sensor (20) zugeordneten Position befindet.

8. Transporteinrichtung nach Anspruch 7, **dadurch gekennzeichnet, dass** die Positionssensoren (20) induktive Sensoren sind, wobei an den Objekt-Trägerelementen von den induktiven Sensoren erfassbare Markierungselemente vorgesehen sind.

9. Transporteinrichtung nach Anspruch 7 oder 8, **dadurch gekennzeichnet, dass** die Einrichtung (19) zur Bestimmung der Position der Objekt-Trägerelemente eine Eingabeeinheit (24) zur Eingabe der Position eines der Objekt-Trägerelemente (6) der Reihe der Objekt-Trägerelemente in Bezug auf ein ortsfestes Referenzsystem aufweist.

10. Transporteinrichtung nach einem der Ansprüche 7 bis 9, **dadurch gekennzeichnet, dass** die Einrichtung (19) zur Bestimmung der Anordnung der Objekt-Trägerelemente eine das Positionssignal der Positionssensoren (20) auswertende Auswerteeinheit (23) aufweist, die derart ausgebildet ist, dass auf der Grundlage der mit der Eingabeeinheit (24) eingegebenen Position eines der Objekt-Trägerelemente (6) in Bezug auf das ortsfeste Referenzsystem ein die Position der Objekt-Trägerelemente in Bezug auf das ortsfeste Referenzsystem beschreibender Datensatz erzeugt wird.

11. Transporteinrichtung nach einem der Ansprüche 7 bis 10, **dadurch gekennzeichnet, dass** die Einrichtung (19) zur Bestimmung der Anordnung der Objekt-Trägerelemente einen Drehwertgeber (25) aufweist, der in Abhängigkeit von der Drehstellung des Objektträgers ein Drehstellungssignal erzeugt.

12. Transporteinrichtung nach einem der Ansprüche 7 bis 11, **dadurch gekennzeichnet, dass** die Transporteinrichtung eine Steuereinrichtung (11) für die Antriebseinheit (5) des Objektträgers (3) aufweist, die über eine Datenleitung (27) mit der Einrichtung (19) zur Bestimmung der Position der Objekt-Trägerelemente verbunden ist.

13. Transporteinrichtung nach einem der Ansprüche 1 bis 12, **dadurch gekennzeichnet, dass** eine Führungsbahn (9) vorgesehen ist, in der die Objekt-Trägerelemente (6) geführt sind.

14. Transporteinrichtung nach einem der Ansprüche 1 bis 13, **dadurch gekennzeichnet, dass** die Objekt-Trägerelemente (6) mehrere Aufnahmeelemente (7) aufweisen, die jeweils zur Aufnahme eines Objektes ausgebildet sind.

15. Produktionsanlage zur Herstellung von Produkten mit einer Transporteinrichtung zum Transport von Objekten nach einem der Ansprüche 1 bis 14, **dadurch gekennzeichnet, dass** eine Mehrzahl von um den Objektträger umfangsmäßig verteilt angeordneten Arbeitsstationen (A, B, C, D) vorgesehen ist, wobei jede Arbeitsstation zur Durchführung eines mindestens einen Arbeitsschritt umfassenden Arbeitsprozesses an mindestens einem Produkt, das auf einem Objekt-Trägerelement (6) angeordnet ist, ausgebildet ist.

**Claims**

1. Transport device for transporting objects from workstation to workstation in a production system comprising a stationary assembly (2), an object carrier (3) rotatable about an axis of rotation in successive work cycles, a plurality of object carrier elements (6), arranged circumferentially distributed and movable relative to the object carrier (3) on a circular path (8), for depositing one or more objects, and a drive unit (5) for driving the object carrier (3),
**characterised in that**
coupling elements (14) are assigned to the object carrier elements (6), and can each take on only a first switching position or a second switching position, and actuators (16) are assigned to the coupling elements (14), and are formed in such a way that the coupling elements are moved into the first or second switching position,
in the first switching position, the coupling element (14) being engaged with the stationary assembly (2) and disengaged from the rotatable object carrier (3), in such a way that the object carrier element (6) assigned to the coupling element (14) remains at a workstation (A, B, C, D), and
in the second switching position, the coupling element (14) being disengaged from the stationary assembly (2) and engaged with the rotatable object carrier (3), in such a way that the object carrier element (6) assigned to the coupling element (14) is moved from workstation to workstation (A, B, C, D).

2. Transport device according to claim 1, **characterised in that** a predetermined number of recesses (17) arranged circumferentially distributed are provided on the stationary assembly (2), and a predetermined number of recesses (19) arranged circumferentially distributed are provided on the rotatable object carrier (3), the number of recesses (18) of the stationary assembly corresponding to the number of recesses (19) in the object carrier (3), and the coupling element (14) comprising a first engagement element (14A) which engages in one of the recesses (17) of the stationary assembly (2) in the first switching position, and the coupling element (14) comprising a second engagement element (14B) which engages in one of the recesses (18) of the object carrier (3) in the second switching position, the first and second engagement elements (14A, 14B) being rigidly interconnected,

3. Transport device according to either claim 1 or claim 2, **characterised in that** the recesses (17) of the stationary assembly (2) have radially inward-facing openings (17A), and the recesses (18) of the object carrier have (3) radially outward-facing openings (18A), the first and second engagement elements (14A, 14B) being guided displaceably in a radial direction in such a way that in the first switching position, the first engagement element (14A) engages in one of the recesses (17) of the stationary assembly (2) and, in the second switching position, the second engagement element (14B) engages in one of the recesses (18) of the object carrier (3).

4. Transport device according to claim 3, **characterised in that** the coupling elements (14) are guided longitudinally displaceably on guide elements (15), the actuators (16) for moving the coupling elements being piston/cylinder arrangements to which a pressurising medium can be applied, in such a way that the coupling elements (14) can be moved between the first and second switching positions.

5. Transport device according to claim 4, **characterised in that** the piston/cylinder arrangements are double-action piston/cylinder arrangements having two opposing piston faces to which a pressurising medium can be applied.

6. Transport device according to any of claims 1 to 5, **characterised in that** no object carrier element (6) is arranged on one portion of the circular path (8), and an object carrier element (6) is arranged on each of the other portions of the circular path (8).

7. Transport device according to any of claims 1 to 6, **characterised in that** a device (19) for determining the positions of the object carrier elements (6) is provided which comprises position sensors (20) which are arranged circumferentially distributed and assigned to the individual object carrier elements, the sensors (20) being formed in such a way that the sensors generate a position signal when an object carrier element (6) is located in a position assigned to the respective sensor (20) or no object carrier element (6) is located in a position assigned to the respective sensor (20).

8. Transport device according to claim 7, **characterised in that** the position sensors (20) are inductive sensors, marking elements detectable by the inductive sensors being arranged on the object carrier elements.

9. Transport device according to either claim 7 or claim 8, **characterised in that** the device (19) for determining the position of the object carrier elements comprises an input unit (24) for inputting the position of one of the object carrier elements (6) in the series of the object carrier elements in relation to a stationary reference system.

10. Transport device according to any of claims 7 to 9, **characterised in that** the device (19) for determining the arrangement of the object carrier elements comprises an evaluation unit (23) which evaluates the position signal of the position sensors (20) and which is formed in such a way that on the basis of a position, inputted using the input unit (24), of one of the object carrier elements (6) in relation to the stationary reference system, a data set describing the position of the object carrier elements in relation to the stationary reference system is generated.

11. Transport device according to any of claims 7 to 10, **characterised in that** the device (19) for determining the arrangement of object carrier elements comprises a rotary encoder (25) which generates a rotational position signal according to the rotational position of the object carrier.

12. Transport device according to any of claims 7 to 11, **characterised in that** the transport device comprises a control device (11) for the drive unit (5) of the object carrier (3), said control device being connected via a data line (27) to the device (19) for determining the position of the object carrier elements.

13. Transport device according to any of claims 1 to 12, **characterised in that** a guide path (9) in which the object carrier elements (6) are guided is provided.

14. Transport device according to any of claims 1 to 13, **characterised in that** the object carrier elements (6) comprise a plurality of receiving elements (7) which are each formed for receiving an object.

15. Production system for manufacturing products comprising a transport device for transporting objects according to any of claims 1 to 14, **characterised in that** a plurality of workstations (A, B, C, D) arranged circumferentially distributed about the object carrier are provided, each workstation being formed to carry out a work process comprising at least one work step on at least one product which is arranged on an object carrier element (6).

**Revendications**

1. Dispositif de transport pour le transport d'objets de station de travail en station de travail d'une installation de production avec un module fixe (2), un support d'objet (3) rotatif autour d'un axe de rotation dans des cycles de travail successifs, une pluralité d'éléments de support d'objet (6) mobiles par rapport au support d'objet (3) sur une trajectoire circulaire (8), agencés répartis sur la périphérie pour le dépôt d'un ou plusieurs objets et d'une unité d'entraînement (5) pour l'entraînement du support d'objet (3),
   **caractérisé en ce que**
   des éléments de couplage (14) sont associés aux éléments de support d'objet (6), lesquels peuvent occuper respectivement seulement une première position de commutation ou une seconde position de commutation, et des actionneurs (16) sont associés aux éléments de couplage (14), lesquels sont réalisés de telle manière que les éléments de couplage soient déplacés dans la première ou seconde position de commutation,
   dans lequel
   dans la première position de commutation, l'élément de couplage (14) est en prise avec le module fixe (2) et est hors prise avec le support d'objet (3) rotatif de sorte que l'élément de support d'objet (6) associé à l'élément de couplage (14) reste au niveau d'une station de travail (A, B, C, D), et
   dans la seconde position de commutation, l'élément de couplage (14) est hors prise avec le module fixe (2) et est en prise avec le support d'objet (3) rotatif de sorte que l'élément de support d'objet (6) associé à l'élément de couplage (14) soit déplacé de station de travail en station de travail (A, B, C, D).

2. Dispositif de transport selon la revendication 1, **caractérisé en ce qu'**au niveau du module fixe (2) un nombre prédéfini d'évidements (17) agencés répartis sur la périphérie est prévu et au niveau du support d'objet (3) rotatif un nombre prédéfini d'évidements (19) agencés répartis sur la périphérie est prévu, dans lequel le nombre des évidements (18) du module fixe correspond au nombre d'évidements (19) du support d'objet (3), et l'élément de couplage (14) présente un premier élément de mise en prise (14A) qui vient en prise dans la première position de commutation dans un des évidements (17) du module fixe (2), et l'élément de couplage (14) présente un second élément de mise en prise (14B) qui vient en prise dans la seconde position de commutation dans un des évidements (18) du support d'objet (3), dans lequel le premier et second élément de mise en prise (14A, 14B) sont reliés entre eux de manière fixe.

3. Dispositif de transport selon la revendication 1 ou 2, **caractérisé en ce que** les évidements (17) du module fixe (2) présentent des ouvertures (17A) tournées radialement vers l'intérieur et les évidements (18) du support d'objet (3) présentent des ouvertures (18A) dirigées radialement vers l'extérieur, dans lequel le premier et second élément de mise en prise (14A, 14B) sont guidés de manière mobile dans un sens radial de telle manière que dans la première position de commutation le premier élément de mise en prise (14A) vienne en prise dans un des évidements (17) du module fixe (2) et dans la seconde position de commutation le second élément de mise en prise (14B) vienne en prise dans un des évidements (18) du support d'objet (3).

4. Dispositif de transport selon la revendication 3, **caractérisé en ce que** les éléments de couplage (14) sont guidés de manière mobile longitudinalement au niveau des éléments de guidage (15), dans lequel les actionneurs (16) pour le déplacement des éléments de couplage sont des agencements à piston et cylindre qui peuvent être alimentés avec un milieu de moyen sous pression de sorte que les éléments de couplage (14) soient mobiles entre la première et seconde position de commutation.

5. Dispositif de transport selon la revendication 4, **caractérisé en ce que** les agencements à piston et cylindre sont des agencements à piston et cylindre à double action avec deux surfaces de piston opposées qui peuvent être alimentées avec un milieu de moyen sous pression.

6. Dispositif de transport selon l'une quelconque des revendications 1 à 5, **caractérisé en ce qu'**un élément de support d'objet (6) n'est pas agencé sur une section de la trajectoire circulaire (8) et un élément de support d'objet (6) respectif est agencé sur les autres sections de la trajectoire circulaire (8).

7. Dispositif de transport selon l'une des revendications 1 à 6, **caractérisé en ce qu'**un dispositif (19) est prévu pour la détermination de la position des éléments de support d'objet (6), qui présente des capteurs (20) de position associés aux éléments de support d'objet individuels qui sont agencés répartis sur la périphérie, dans lequel les capteurs (20) sont réalisés de telle manière que les capteurs génèrent un signal de position lorsqu'un élément de support d'objet (6) se trouve dans une position associée au capteur (20) respectif ou un élément de support d'objet (6) ne se trouve pas dans une position associée au capteur (20) respectif.

8. Dispositif de transport selon la revendication 7, **caractérisé en ce que** les capteurs (20) de position sont des capteurs inductifs, dans lequel des éléments de marquage détectables par les capteurs inductifs sont prévus au niveau des éléments de support d'objet.

9. Dispositif de transport selon la revendication 7 ou 8, **caractérisé en ce que** le dispositif (19) présente pour la détermination de la position des éléments de support d'objet une unité de saisie (24) pour la saisie de la position d'un des éléments de support d'objet (6) de la rangée des éléments de support d'objet par rapport à un système de référence fixe.

10. Dispositif de transport selon l'une des revendications 7 à 9, **caractérisé en ce que** le dispositif (19) présente pour la détermination de l'agencement des éléments de support d'objet une unité d'évaluation (23) évaluant le signal de position des capteurs (20) de position qui est réalisé de telle manière qu'un jeu de données décrivant la position des éléments de support d'objet par rapport au système de référence fixe soit généré sur la base de la position saisie avec l'unité de saisie (24) d'un des éléments de support d'objet (6) par rapport au système de référence fixe.

11. Dispositif de transport selon l'une des revendications 7 à 10, **caractérisé en ce que** le dispositif (19) présente pour la détermination de l'agencement des éléments de support d'objet un transmetteur de valeur de rotation (25) qui génère en fonction de la position de rotation du support d'objet un signal de position de rotation.

12. Dispositif de transport selon l'une des revendications 7 à 11, **caractérisé en ce que** le dispositif de transport présente un dispositif de commande (11) pour l'unité d'entraînement (5) du support d'objet (3) qui est relié par le biais d'un câble de données (27) au dispositif (19) pour la détermination de la position des éléments de support d'objet.

13. Dispositif de transport selon l'une des revendications 1 à 12, **caractérisé en ce qu'**une bande de guidage (9) est prévue, dans laquelle les éléments de support d'objet (6) sont guidés.

14. Dispositif de transport selon l'une des revendications 1 à 13, **caractérisé en ce que** les éléments de support d'objet (6) présentent plusieurs éléments de réception (7) qui sont réalisés respectivement pour la réception d'un objet.

15. Installation de production pour la fabrication de produits avec un dispositif de transport pour le transport d'objets selon l'une des revendications 1 à 14, **caractérisée en ce qu'**une pluralité de stations de travail (A, B, C, D) agencées réparties sur la périphérie autour du support d'objet est prévue, dans laquelle chaque station de travail est réalisée pour la réalisation d'un processus de travail comprenant au moins une étape de travail au niveau d'au moins un produit qui est agencé sur un élément de support d'objet (6).

Fig. 1

**Fig. 2**

Fig. 3

Fig. 4

Fig. 5

Fig. 6

Fig. 7

Fig. 8

Fig. 9

Fig. 10

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2045428 A5
- EP 0446659 A2